# EUROPÄISCHE PATENTSCHRIFT

(11) **EP 3 980 195 B1**
(45) Veröffentlichungstag und Bekanntmachung des Hinweises auf die Patenterteilung: **18.12.2024**
(21) Anmeldenummer: 20726714.7
(22) Anmeldetag: 06.05.2020
(51) Int. Cl.: B05C 19/04, B27N 3/14

(54) **STREUWALZE FÜR EINE VERTEILVORRICHTUNG**
SPREADER ROLL FOR A DISTRIBUTING DEVICE
ROULEAU DE SAUPOUDRAGE POUR UN DISPOSITIF DE DISTRIBUTION

(30) Priorität: 07.06.2019 DE 202019002531 U
(43) Veröffentlichungstag der Anmeldung: 13.04.2022
(73) Patentinhaber: IPCO Germany GmbH, 70736 Fellbach (DE)
(72) Erfinder: HOFFMEYER, Frank, 73072 Donzdorf (DE); SCHROMM, Hans-Kurt, 71522 Backnang (DE)
(74) Vertreter: Patentanwälte Ruff, Wilhelm, Beier, Dauster & Partner mbB
(86) Internationale Anmeldenummer: PCT/EP2020/062577
(87) Internationale Veröffentlichungsnummer: WO 2020/244876

(56) Entgegenhaltungen:
- EP-A1- 1 010 508
- EP-A2- 1 231 039
- DE-U1- 202015 105 864
- DE-U1- 29 617 541
- US-B2- 6 834 764

## Beschreibung

Die Erfindung betrifft eine Streuwalze für eine Verteilvorrichtung für Granulat oder Fasern, wobei die Streuwalze einen tragenden, zylindrischen Kern aufweist, an einem Rahmen der Verteilvorrichtung drehbar gelagert werden kann, und wobei auf dem Außenumfang des Kerns wenigstens abschnittsweise ein Kunststoffbesatz vorgesehen ist, der mit Borsten und/oder Stiften versehen ist.

Aus der europäischen Offenlegungsschrift EP 1 010 508 A1 ist eine Streumaschine für Holzspäne, Fasern und dergleichen bekannt. Die Streumaschine weist Streuwalzen auf. Die Streuwalzen weisen jeweils einen Grundkörper auf, der mit mehreren Ringen besetzt ist. Die Ringe sind auf den Walzenkörper aufgezogen. Die Ringe bestehen aus Metall.

Aus der europäischen Offenlegungsschrift EP 1 231 039 A2 ist ein Streukopf zum Streuen von Spänevliesen bekannt. Der Streukopf weist mehrere, achsparallel nebeneinander rotierend angeordnete Streuwalzen auf. Die Streuwalzen sind mit Stachelreihen versehen, die jeweils auf einzelnen Ringen auf einen Walzengrundkörper aufgesetzt sind. Zwischen benachbarten Ringen sind Druckfedern eingesetzt.

Aus dem deutschen Gebrauchsmuster DE 29617541 U1 ist eine Pulverstreumaschine bekannt, die eine Nadelwalze aufweist. Die Nadelwalze ist eine Hohlwalze und lösbar mit ihrer Walzenlagerachse verbunden, um die Nadelwalze in einfacher Weise auswechseln zu können.

Mit der Erfindung soll die Handhabbarkeit einer Streuwalze verbessert werden.

Erfindungsgemäß ist hierzu eine Streuwalze für eine Verteilvorrichtung für Granulat oder Fasern vorgesehen, wobei die Streuwalze einen tragenden, zylindrischen Kern aufweist, an einem Rahmen der Verteilvorrichtung drehbar gelagert werden kann und wobei auf dem Außenumfang des Kerns wenigstens abschnittsweise ein Kunststoffbesatz vorgesehen ist, der mit Borsten und/oder Stiften versehen ist, bei der der Kunststoffbesatz rohrförmig ausgebildet ist und verdrehsicher und zerstörungsfrei lösbar auf dem Kern befestigt ist.

Streuwalzen werden in Verteilvorrichtungen eingesetzt, mit denen ein Granulat oder auch Fasern gleichmäßig über die Breite der Walze ausgestreut werden sollen. Beispielsweise wird ein Kunststoffgranulat gleichmäßig auf ein Metallband einer Presse aufgestreut und aus dem Kunststoffgranulat wird in der Presse dann ein Fußbodenbelag hergestellt. Bei zahlreichen Anwendungen, mit denen flächige Materialien aus Fasern und/oder Granulat hergestellt werden sollen, werden Verteilvorrichtungen mit Streuwalzen benötigt, um das Granulat oder die Fasern gleichmäßig über die Breite eines Trägerbands, beispielsweise ein Kunststoffband oder ein Stahlband, aufzustreuen. Die erfindungsgemäße Streuwalze kann dabei am Auslass eines Trichters angeordnet sein, so dass bei einer Drehung der Streuwalze gleichmäßig Granulat oder Fasern aus dem Trichter entnommen werden und auf den Träger aufgestreut werden. Bei Fasern und speziellen Arten von Granulat ist die Streuwalze ebenfalls am Ausgang eines Trichters angeordnet, eine weitere Streuwalze übernimmt dann aber das mittels der ersten Streuwalze aus dem Trichter ausgetragene Material oder bürstet das Material aus der ersten Streuwalze aus, so dass dieses dann auf den Träger gelangt. Je nach zu verstreuendem Material weisen die Streuwalzen unterschiedliche Borsten und/oder Stifte in dem Kunststoffbesatz auf bzw. sind die Borsten und/oder Stifte in unterschiedlichen Mustern an dem Kunststoffbesatz befestigt. Borsten werden üblicherweise in Sacklochbohrungen des Kunststoffbesatzes befestigt. Stifte werden in Sacklochbohrungen des Kunststoffbesatzes eingesteckt.

Indem erfindungsgemäß der Kunststoffbesatz rohrförmig ausgebildet ist und verdrehsicher und zerstörungsfrei lösbar auf dem Kern befestigt ist, kann der Kunststoffbesatz in einfacher Weise ausgetauscht werden, wenn beispielsweise die Borsten und/oder Stifte verschlissen sind. Bei konventionellen Streuwalzen ist der Kunststoffbesatz unlösbar auf dem tragenden Kern befestigt und muss bei einer Überholung der Streuwalze zerstört werden, beispielsweise indem er von dem Kern mittels eines Drehmeißels abgedreht wird. Da die Streuwalzen Breiten von etwa 0,5 m bis mehreren Metern haben, ist der Transport in eine Werkstatt, die mit den geeigneten Mitteln zum Entfernen des Kunststoffbesatzes bei konventionellen Streuwalzen ausgerüstet ist, sehr aufwändig. Die Erfindung schafft hier Abhilfe, indem der Kunststoffbesatz rohrförmig ausgebildet ist und verdrehsicher und zerstörungsfrei lösbar auf dem Kern befestigt ist. Ein Kunststoffbesatz mit verschlissenen Borsten und/oder Stiften kann infolgedessen von dem zylindrischen Kern abgezogen und durch einen neuen Kunststoffbesatz ersetzt werden. Der Kunststoffbesatz ist naturgemäß wesentlich leichter und damit handlicher als die vollständige Streuwalze und kann dadurch auch leicht versandt werden. Vor allem aber wird für das Erneuern des Kunststoffbesatzes bei der erfindungsgemäßen Streuwalze kein Spezialwerkzeug zum Abdrehen des Kunststoffbesatzes von dem tragenden Kern benötigt. Vielmehr kann der Kunststoffbesatz in einfacher Weise von dem tragenden, zylindrischen Kern abgezogen werden und ein neuer Kunststoffbesatz kann auf den Kern aufgeschoben werden. Durch die Erfindung ist es beispielsweise möglich, dass am Ort einer Verteilvorrichtung mehrere Kunststoffbesätze zum Austausch vorgehalten werden. Da der Kunststoffbesatz lediglich einen Bruchteil des Preises der kompletten Streuwalze hat, ist dies auch in wirtschaftlicher Weise möglich.

In Weiterbildung der Erfindung ist der Kunststoffbesatz über eine Länge des tragenden Kerns gesehen in mehrere rohrförmige Segmente unterteilt.

Auf diese Weise kann die Handhabung des Kunststoffbesatzes weiter erleichtert werden. Auch die Herstellung des Kunststoffbesatzes wird erheblich erleichtert, da beispielsweise ein Kunststoffbesatz mit einer Länge von mehreren Metern in Form mehrerer rohrförmiger Segmente hergestellt werden kann. Mehrere, beispielsweise lediglich jeweils 0,5 m lange rohrförmige Segmente, lassen sich wesentlich präziser herstellen als ein beispielsweise 3 m bis 4 m langer rohrförmiger Kunststoffbesatz. Auch der Transport und die Lagerung eines in mehrere rohrförmige Segmente unterteilten Kunststoffbesatzes sind wesentlich einfacher gegenüber dem Transport eines nicht unterteilten Kunststoffbesatzes oder gar einer konventionellen Streuwalze.

Gemäß der Erfindung ist zwischen einem Innenumfang des Kunststoffbesatzes und einem Außenumfang des Kerns wenigstens eine Passfeder vorgesehen.

Eine Passfeder ist eine Leiste, die einerseits in eine Nut des Kerns und andererseits in eine Nut des Kunststoffbesatzes eingreift. Passfedern sind als kostengünstige Standardteile erhältlich. Mittels einer Passfeder oder mehreren Passfedern zwischen dem Kunststoffbesatz und dem Kern kann eine Drehposition des Kunststoffbesatzes auf dem Kern festgelegt werden und der rohförmige Kunststoffbesatz kann verdrehsicher, aber in Längsrichtung des Kerns verschiebbar und damit zerstörungsfrei lösbar auf dem Kern befestigt werden. Beispielsweise werden zwischen dem Kunststoffbesatz und dem Kern drei Passfedern verwendet, die gleichmäßig über den Umfang des Kerns voneinander beabstandet sind.

In Weiterbildung der Erfindung sind ein Durchmesser des Innenumfangs des Kunststoffbesatzes und ein Durchmesser des Außenumfangs des Kerns so aufeinander abgestimmt, dass der Kunststoffbesatz auf den Kern aufgeschoben werden kann, aber spielfrei auf dem Kern sitzt.

Auf diese Weise kann die Streuwalze äußerst präzise und mit geringen Toleranzen ausgeführt werden, was für ein gleichmäßiges Streuergebnis erforderlich ist. Gleichzeitig kann der Kunststoffbesatz dennoch zerstörungsfrei lösbar auf dem Kern befestigt werden.

In Weiterbildung der Erfindung ist der Kern an seinem Außenumfang an einem Ende mit einem Anschlag und an seinem gegenüberliegenden Ende mit einem Gewinde zum Aufschrauben einer Mutter versehen.

In Längsrichtung der Streuwalze, also in Richtung der Breite der Streuwalze, kann der Kunststoffbesatz damit sicher zwischen dem Anschlag und der Mutter eingespannt und damit arretiert werden. Dies ist insbesondere dann vorteilhaft, wenn der Kunststoffbesatz in mehrere rohrförmige Segmente unterteilt ist, die dann mittels des Anschlags und der aufgeschraubten Mutter gegeneinander vorgespannt werden und dadurch spielfrei aneinanderliegen.

In Weiterbildung der Erfindung besteht der Kern aus Stahl oder Kunststoff, insbesondere kohlefaserverstärktem Kunststoff.

Tragende Kerne aus Stahl lassen sich hochpräzise herstellen, sind aber vergleichsweise schwer. Bei großen Streuwalzenbreiten, beispielsweise Breiten von 3 m bis 4 m, führt dies zu einem hohen Gewicht, und das Eigengewicht der Streuwalze kann auch zu einer Durchbiegung der Streuwalze führen. Tragende Kerne aus kohlefaserverstärktem Kunststoff können ebenfalls hochpräzise hergestellt werden und haben den Vorteil, wesentlich leichter als Stahlkerne zu sein.

In Weiterbildung der Erfindung ist der Kunststoffbesatz aus Polyoxymethylen (POM) oder Polyamid (PA) gebildet.

Sowohl Polyoxymethylen als auch Polyamid sind Kunststoffe mit hoher Dichte, die äußerst präzise und mit geringen Toleranzen bearbeitet werden können. Dadurch ist es möglich, einen rohrförmigen Kunststoffbesatz so präzise zu fertigen, dass dieser auf den Kern aufgeschoben werden kann, aber spielfrei auf dem Kern sitzt. Auch Borsten und/oder Stifte können in einem Kunststoffbesatz aus Polyoxymethylen oder Polyamid sicher und präzise verankert werden.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Ansicht auf eine erfindungsgemäße Streuwalze von schräg vorne,
- Fig. 2: eine Ansicht auf die Streuwalze der Fig. 1 von schräg hinten,
- Fig. 3: eine vergrößerte Darstellung der Einzelheit C aus Fig. 1,
- Fig. 4: eine vergrößerte Darstellung der Einzelheit D aus Fig. 2,
- Fig. 5: eine Seitenansicht der Streuwalze der Fig. 1,
- Fig. 6: eine Ansicht auf die Schnittebene A-A in Fig. 5,
- Fig. 7: eine Ansicht auf die Schnittebene B-B in Fig. 5,
- Fig. 8: eine vergrößerte Darstellung der Einzelheit E in Fig. 5 und
- Fig. 9: eine auseinandergezogene Darstellung der Streuwalze der Fig. 1 im teilmontierten Zustand.

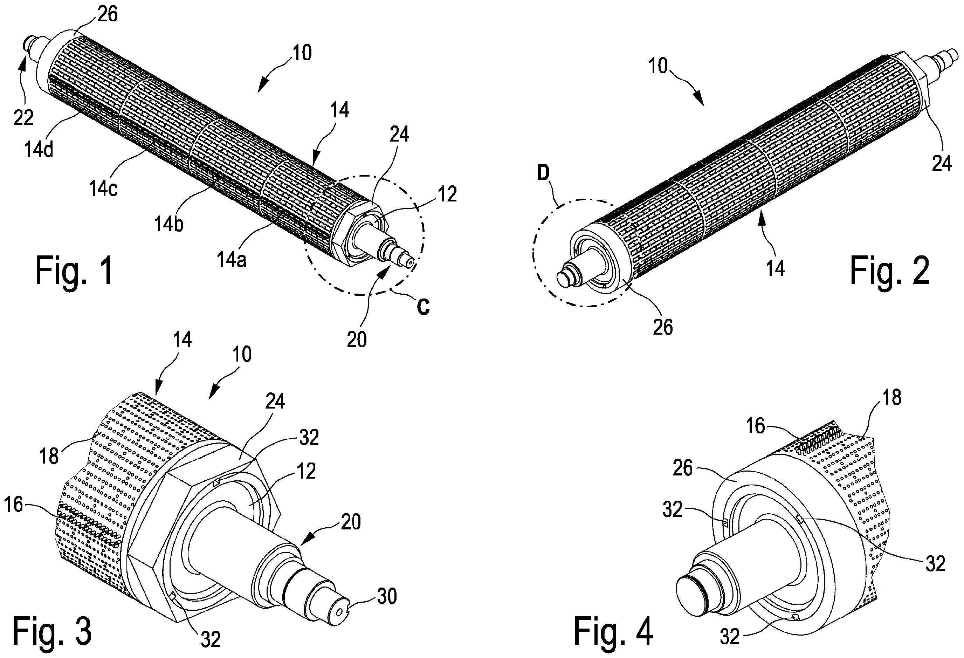

Die Darstellung der Fig. 1 zeigt eine erfindungsgemäße Streuwalze 10, die einen tragenden Kern 12 und einen rohrförmigen, auf dem tragenden Kern 12 angeordneten Kunststoffbesatz 14 aufweist. Der Kunststoffbesatz 14 ist über seinen Umfang gesehen mit zahlreichen Stiften versehen, vgl. Fig. 3 und Fig. 4, die in radialer Richtung abragen. Die Stifte sind jeweils in Sacklochbohrungen in dem Kunststoffbesatz 14 angeordnet. Wie in Fig. 3 und Fig. 4 zu erkennen ist, sind lediglich einige der Stifte dargestellt, etliche der Sacklöcher in dem Kunststoffbesatz 14 sind ohne eingesetzte Stifte dargestellt. Anstelle der in Fig. 3 und Fig. 4 erkennbaren Stifte können beispielsweise auch Borsten in die Sacklöcher eingesetzt werden. Eine gemischte Anordnung aus Borsten und Stiften ist möglich. Je nach vorgesehenem Anwendungszweck wird die Anzahl und Anordnung der Stifte und/oder Borsten auf dem Kunststoffbesatz 14 gewählt.

Der tragende Kern 12 ist an beiden Enden mit Lagerzapfen 20, 22 versehen, die dann in einer Verteilvorrichtung drehbar gelagert werden.

In einer Verteilvorrichtung wird die Streuwalze 10 typischerweise unterhalb einer Auslassöffnung eines Trichters angeordnet. Die Breite der Auslassöffnung entspricht üblicherweise der Breite des Kunststoffbesatzes 14 der Streuwalze 10, so dass Granulat oder Fasern aus dem Trichter über die gesamte Breite des Kunststoffbesatzes 14 der Streuwalze 10 auf den Kunststoffbesatz 14 gelangen und aus dem Trichter ausgetragen werden kann. Ein Zwischenraum zwischen dem Außenumfang des Kunststoffbesatzes 14 der Streuwalze 10 und der Auslassöffnung des Trichters wird so bemessen, dass lediglich dann, wenn sich die Streuwalze 10 dreht, Granulat und/oder Fasern aus dem Trichter ausgetragen werden. Über eine Drehzahl der Streuwalze 10 kann dadurch die Menge an ausgetragenem Granulat und/oder Fasern eingestellt werden. Von dem Außenumfang der Streuwalze 10 fallen das ausgetragene Granulat und/oder die ausgetragenen Fasern dann üblicherweise auf ein Transportband, beispielsweise ein Kunststoffband oder ein Stahlband, und werden dann in einer nachfolgenden Presse und/oder Heizeinrichtung zu einem kompakten, flächigen Belag verarbeitet. Bei Fasern und speziellen Granulaten ist es auch üblich, neben der Streuwalze 10 eine weitere Streuwalze vorzusehen, die auch als Ausbürstwalze bezeichnet wird und die dann das zwischen den Stiften und/oder Borsten der Streuwalze 10 aufgenommene Granulat und/oder Fasern ausbürstet oder aufnimmt und erst dann auf einen bandförmigen Träger ablegt.

In Fig. 1 ist zu erkennen, dass im Bereich eines ersten Endes des tragenden Kerns eine Mutter 24 auf den Kern 12 aufgeschraubt ist. Am gegenüberliegenden Ende ist der Kern 12 mit einem umlaufenden Anschlag 26 versehen. Der Kunststoffbesatz 14 wird in Längsrichtung der Streuwalze 10, also in axialer Richtung der Streuwalze 10, mittels des Anschlags 26 und der Mutter 24 fixiert. Die Mutter 24 wird hierbei vorgespannt, so dass der Kunststoffbesatz 14 spielfrei an dem Anschlag 26 und an der Mutter 24 anliegt. Wie noch erläutert werden wird, besteht der Kunststoffbesatz 14 aus mehreren rohrförmigen Segmenten 14a, 14b, 14c und 14d, die mittels der Mutter 24 und dem Anschlag 26 gegeneinander vorgespannt werden und somit mit ihren Stirnseiten spielfrei aneinander anliegen.

Fig. 2 zeigt die Streuwalze 10 der Fig. 1 in einer Ansicht von schräg hinten. In dieser Ansicht ist der Anschlag 26 dem Betrachter zugewandt.

Fig. 3 zeigt in vergrößerter Darstellung die Einzelheit C der Fig. 1. Zu erkennen ist der Lagerzapfen 20 am Ende des tragenden Kerns 12. Der Lagerzapfen 20 ist bezüglich seines Durchmessers abgestuft ausgebildet. An seinem freien Ende weist der Lagerzapfen 20 eine in Längsrichtung der Streuwalze 10 verlaufende Nut 30 auf. In diese Nut 30 kann beispielsweise eine Passfeder eingeschoben werden, die dann wiederum in eine Antriebsvorrichtung für die Streuwalze 10 eingreift.

Im Bereich der Mutter 24 ist zu erkennen, dass ein Außenumfang des Kerns mit mehreren in Längsrichtung durchgehenden Nuten 32 versehen ist. Im Bereich der Lagerzapfen 20, 22 sind die Nuten 32 nicht vorgesehen. Insgesamt sind drei in Längsrichtung durchgehende Nuten 32 auf dem Außenumfang des tragenden Kerns 12 vorgesehen, vgl. Fig. 4. In diese Nuten 32 werden Passfedern eingesetzt, die dann einerseits in den Nuten 32 des tragenden Kerns 12 und andererseits in Nuten am Innenumfang des Kunststoffbesatzes 14 angeordnet sind. Mittels solcher, in den Fig. 3 und 4 nicht erkennbaren Passfedern, die aber als Standardteile erhältlich sind, kann der Kunststoffbesatz 14 verdrehsicher auf dem tragenden Kern 12 befestigt werden.

In Fig. 3 und Fig. 4 sind auch einige Stifte 16 zu erkennen, die in Sacklöcher im Kunststoffbesatz 14 eingesetzt sind und die sich relativ zur Längsachse der Streuwalze 10 in radialer Richtung erstrecken. Das Muster, in dem die Stifte 16 und die Sacklöcher 18 angeordnet sind, hängt von dem vorgesehenen Anwendungszweck der Streuwalze 10 ab, mithin also davon, welches Granulat oder welche Fasern mittels der Streuwalze 10 verstreut werden sollen.

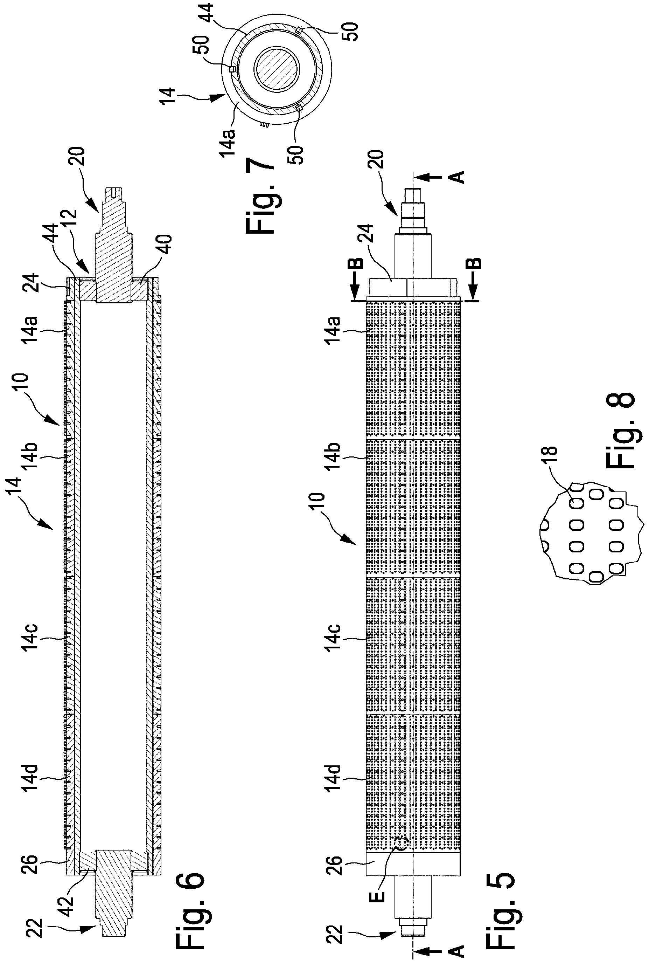

Die Darstellung der Fig. 5 zeigt eine Seitenansicht der Streuwalze 10 der Fig. 1. Die beiden Lagerzapfen 20, 22 ragen jeweils über einen zylindrischen Abschnitt mit in Längsrichtung gesehen konstantem Durchmesser des tragenden Kerns 12 hinaus. Auf der Seite des Lagerzapfens 22 ist an einem Ende des zylindrischen Abschnitts der Anschlag 26 vorgesehen und auf der Seite des Lagerzapfens 20 ist am anderen Ende des zylindrischen Abschnitts die Mutter 24 vorgesehen. Die in Fig. 5 nicht erkennbaren Nuten 32 erstrecken sich von dem in Fig. 5 rechten Ende des zylindrischen Abschnitts bis zum Anschlag 26

Fig. 6 zeigt eine Ansicht auf die Schnittebene A-A in Fig. 5. Zu erkennen ist, dass die Streuwalze 10 und speziell der tragende Kern 12 der Streuwalze 10 innen hohl ausgebildet ist. Der Lagerzapfen 20 ist in einem ersten stirnseitigen Deckel 40 des tragenden Kerns aufgenommen, der wiederum an einem ersten Ende eines Hohlzylinders 44 befestigt ist und dadurch einseitig den Innenraum des Hohlzylinders 44 abschließt.

Der dem Lagerzapfen 20 gegenüberliegende Lagerzapfen 22 ist in einem zweiten stirnseitigen Deckel 42 angeordnet, der wiederum das gegenüberliegende Ende des Hohlzylinders 44 verschließt. Ein Außenumfang des Hohlzylinders 44 ist kreiszylindrisch ausgebildet. Der Außenumfang des Hohlzylinders 44 bildet den zylindrischen Abschnitt, auf dem der Kunststoffbesatz 14 angeordnet ist. Auf Höhe des stirnseitigen Deckels 42 ist der ringförmige Anschlag 26 auf dem Außenumfang des Hohlzylinders 44 fixiert. Die Mutter 24 ist im Bereich des ersten stirnseitigen Deckels 40 auf ein Außengewinde des Hohlzylinders 44 aufgeschraubt. Der Hohlzylinder 44 bildet in dem Bereich zwischen der Mutter 24 und dem Anschlag 26 den kreiszylindrischen Abschnitt mit konstantem Durchmesser, wobei dieser Durchmesser gegenüber dem Durchmesser der Lagerzapfen 20, 22 größer ist.

Auf diesen kreiszylindrischen Abschnitt auf dem Außenumfang des Hohlzylinders 44 sind die vier rohrförmigen Segmente 14a, 14b, 14c und 14d aufgeschoben, die gemeinsam den Kunststoffbesatz 14 bilden. Die rohrförmigen Segmente 14a, 14b, 14c, 14d sind mittels der Mutter 24 und dem Anschlag 26 gegeneinander verspannt, so dass die in Fig. 6 rechts dargestellte Stirnseite des rohförmigen Segments 14a spielfrei an der Mutter 24 anliegt, die in Fig. 6 links angeordnete Stirnseite des rohrförmigen Segments 14d spielfrei an dem Anschlag 26 anliegt und die Stirnseiten der rohrförmigen Segmente 14b, 14c spielfrei aneinander bzw. an den ihnen zugewandten Stirnseiten der rohrförmigen Segmente 14a, 14b anliegen. Wesentlich für die Funktion der erfindungsgemäßen Streuwalze 10 ist dabei, dass die Stirnseiten der rohrförmigen Segmente 14a, 14b, 14c, 14d spielfrei aneinander anliegen. Dadurch ist ein Außenumfang des Kunststoffbesatzes 14 äußerst präzise und mit extrem geringen Abweichungen von einer Kreiszylinderform ausgeführt, so dass über die gesamte Länge des Kunststoffbesatzes 14 ein gleichmäßiges Streuergebnis sichergestellt werden kann.

Die rohrförmigen Segmente 14a, 14b, 14c, 14d sind spielfrei auf dem Außenumfang des Hohlzylinders 44 angeordnet. Der Innenumfang der rohrförmigen Segmente 14a, 14b, 14c, 14d ist dabei so präzise auf den Außenumfang des Hohlzylinders 44 abgestimmt, dass sich die rohrförmigen Segmente 14a, 14b, 14c, 14d auf den Außenumfang des Hohlzylinders 44 aufschieben lassen, wenn die Mutter 24 entfernt ist. Im aufgeschobenen Zustand sind sie dann aber in radialer Richtung spielfrei auf dem Hohlzylinder 44 angeordnet.

Eine Verdrehsicherung des Kunststoffbesatzes 14 relativ zu dem tragenden Kern 12, bei der dargestellten Ausführungsform also eine Verdrehsicherung der rohrförmigen Segmente 14a, 14b, 14c, 14d relativ zum Außenumfang des Hohlzylinders 44, wird dadurch erreicht, dass, siehe Fig. 7, der Außenumfang des Hohlzylinders 44 mit drei in Längsrichtung durchgehenden Nuten 32 versehen ist, in denen jeweils mehrere Passfedern 50 hintereinander angeordnet sind. Ein Innenumfang des Kunststoffbesatzes 14, also ein Innenumfang der rohrförmigen Segmente 14a, 14b, 14c, 14d, ist ebenfalls mit drei in Umfangsrichtung gleichmäßig voneinander beabstandeten Nuten versehen. Die Passfedern 50 sind so bemessen, dass sie einerseits in die Nuten 32 im Außenumfang des Hohlzylinders 44 und andererseits in die Nuten am Innenumfang der rohrförmigen Segmente 14a, 14b, 14c, 14d des Kunststoffbesatzes 14 eingreifen. Mittels der Passfedern 50 können die rohrförmigen Segmente 14a, 14b, 14c, 14d dadurch verdrehsicher auf dem tragenden Kern 12 bzw. verdrehsicher auf dem Außenumfang des Hohlzylinders 44 angeordnet werden.

Fig. 8 zeigt die Einzelheit E in Fig. 5 in vergrößerter Darstellung. Fig. 8 zeigt einen Ausschnitt des Lochbilds, das durch die Sacklöcher 18 im Kunststoffbesatz 14 gebildet ist. Es ist Fig. 8 zu entnehmen, dass die Sacklöcher einen ovalen Querschnitt aufweisen. Beim Eintreiben von kreiszylindrischen Stiften in die Sacklöcher 18 weiten sich die Sacklöcher 18 dadurch auf und gleichzeitig werden die Stifte 16 in die Sacklöcher 18 eingepresst und sind dadurch verliersicher in den Sacklöchern 18 angeordnet.

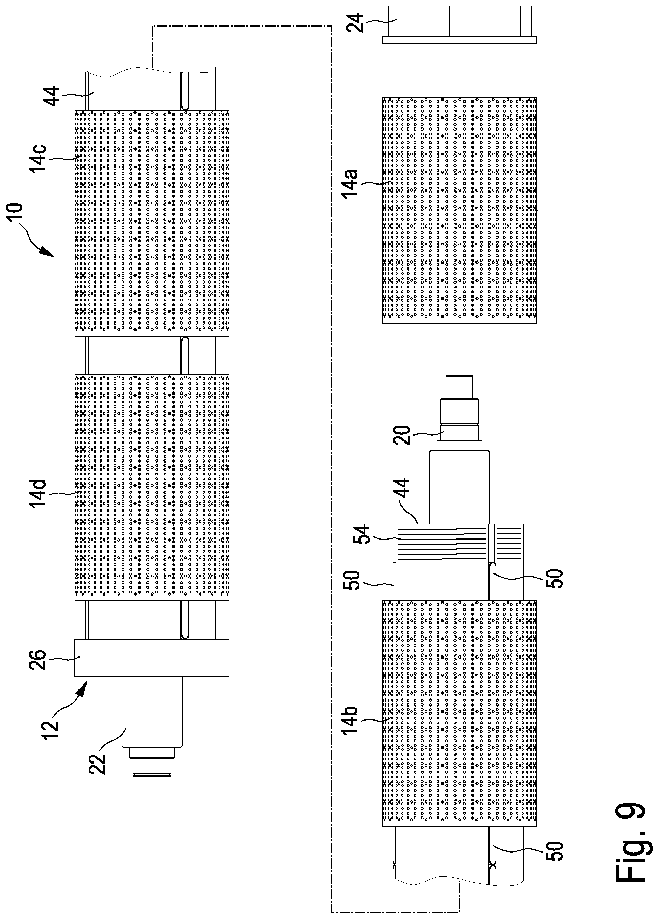

Fig. 9 zeigt die Streuwalze 10 der Fig. 1 im auseinandergezogenen, auseinandergeschnittenen und teilmontierten Zustand. Im Zustand der Fig. 9 sind lediglich die rohrförmigen Segmente 14b, 14c und 14d bereits auf den Außenumfang des Hohlzylinders des tragenden Kerns 12 aufgeschoben. Das rohrförmige Segment 14d ist mit seiner in Fig. 9 links dargestellten Stirnseite noch von dem Anschlag 26 beabstandet. Auch zwischen dem rohrförmigen Segment 14d und dem rohrförmigen Segment 14c sowie zwischen dem rohrförmigen Segment 14c und dem rohrförmigen Segment 14b liegt noch ein Abstand. Dadurch ist in der Fig. 9 zu erkennen, wie die Passfedern 50 in die Nuten 32 im Außenumfang des Hohlzylinders 44 eingesetzt sind. Da die Nuten 32 im Außenumfang des Hohlzylinders 44 und die in Fig. 9 nicht erkennbaren Nuten am Innenumfang der rohrförmigen Segmente 14a, 14b, 14c, 14d in Längsrichtung der Streuwalze 10 verlaufen, können die rohrförmigen Segmente 14a, 14b, 14c, 14d in Längsrichtung auf den Hohlzylinder 44 aufgeschoben werden.

Wenn, ausgehend vom Zustand der Fig. 9, die in Fig. 9 links dargestellte Stirnseite des rohrförmigen Segments 14d am Anschlag 26 anliegt, und auch die rohrförmigen Segmente 14a, 14b, 14c auf den Hohlzylinder 44 so aufgeschoben sind, dass ihre Stirnseiten aneinander anliegen, wird die Mutter 24 auf ein in Fig. 9 lediglich schematisch angedeutetes Außengewinde 54 an dem in Fig. 9 rechten Ende des Hohlzylinders 44 aufgeschraubt. Mittels der Mutter 24 können die rohrförmigen Segmente 14a, 14b, 14c, 14d dadurch in Längsrichtung der Streuwalze 10 gesehen gegeneinander und gegen den Anschlag 26 vorgespannt werden.

Wenn der Kunststoffbesatz 14 verschlissen ist, also wenn beispielsweise die Stifte 16 des Kunststoffbesatzes 14 verschlissen sind, kann der Kunststoffbesatz 14 in einfacher Weise dadurch ausgetauscht werden, dass die Mutter 24 vom Hohlzylinder 44 abgeschraubt wird und die rohrförmigen Segmente 14a, 14b, 14c, 14d wieder von dem Hohlzylinder 44 abgezogen werden. Neue rohrförmige Segmente 14a, 14b, 14c, 14d können dann, wie erläutert wurde, wieder auf den Hohlzylinder 44 aufgeschoben und mittels der Mutter 24 gesichert und gegeneinander vorgespannt werden. Die Passfedern 50 sorgen dabei für eine Verdrehsicherung zwischen den rohrförmigen Segmenten 14a, 14b, 14c, 14d des Kunststoffbesatzes 14 und dem Kern 12 bzw. dem Außenumfang des Hohlzylinders 44 des Kerns 12.

## Patentansprüche

1. Streuwalze (10) für eine Verteilvorrichtung für Granulat oder Fasern, wobei die Streuwalze (10) einen tragenden, zylindrischen Kern (12) aufweist, an einem Rahmen der Verteilvorrichtung drehbar gelagert werden kann, und wobei auf dem Außenumfang des Kerns (12) wenigstens abschnittsweise ein Kunststoffbesatz (14) vorgesehen ist, der mit Borsten und/oder Stiften versehen ist, **dadurch gekennzeichnet, dass** der Kunststoffbesatz rohrförmig ausgebildet ist und verdrehsicher und zerstörungsfrei lösbar auf dem Kern befestigt ist und dass zwischen einem Innenumfang des Kunststoffbesatzes (14) und einem Außenumfang des Kerns (12) wenigstens eine Passfeder (50) vorgesehen ist.

2. Streuwalze nach Anspruch 1, **dadurch gekennzeichnet, dass** der Kunststoffbesatz (14) über eine Länge des tragenden Kerns (12) gesehen in mehrere rohförmige Segmente (14a, 14b, 14c, 14d) unterteilt ist.

3. Streuwalze nach wenigstens einem der vorstehenden Ansprüche, **dadurch gekennzeichnet, dass** ein Durchmesser des Innenumfangs des Kunststoffbesatzes (14) und ein Durchmesser des Außenumfangs des Kerns (12) so aufeinander abgestimmt sind, dass der Kunststoffbesatz (14) auf den Kern (12) aufgeschoben werden kann aber spielfrei auf dem Kern (12) sitzt.

4. Streuwalze nach wenigstens einem der vorstehenden Ansprüche, **dadurch gekennzeichnet, dass** der Kern (12) auf seinem Außenumfang an einem Ende mit einem Anschlag (26) und am gegenüberliegenden Ende mit einem Gewinde (54) zum Aufschrauben einer Mutter (24) versehen ist.

5. Streuwalze nach einem der vorstehenden Ansprüche, **dadurch gekennzeichnet, dass** der Kern (12) aus Stahl oder Kunststoff, insbesondere kohlefaserverstärkter Kunststoff, besteht.

6. Streuwalze nach wenigstens einem der vorstehenden Ansprüche, **dadurch gekennzeichnet, dass** der Kunstoffbesatz (14) aus Polyoxymethylen (POM) oder Polyamid (PA) gebildet ist.

## Claims

1. A spreader roll (10) for a distributing device for granular material or fibers, wherein the spreader roll (10) has a load-bearing, cylindrical core (12) and can be rotatably mounted on a frame of the distributing device, and wherein a plastic trim (14) fitted with bristles and/or pins is provided on at least part of the outer circumference of the core (12), **characterized in that** the plastic trim is tubular and is co-rotationally and non-destructively detachably fixed to the core, and **in that** at least one feather key (50) is provided between an inner circumference of the plastic trim (14) and an outer circumference of the core (12).

2. The spreader roll as claimed in claim 1, **characterized in that** the plastic trim (14) is subdivided into a plurality of tubular segments (14a, 14b, 14c, 14d), as viewed over a length of the load-bearing core (12) .

3. The spreader roll as claimed in at least one of the preceding claims, **characterized in that** a diameter of the inner circumference of the plastic trim (14) and a diameter of the outer circumference of the core (12) are matched to each other in such a way that the plastic trim (14) can be pushed onto the core (12) but sits on the core (12) without play.

4. The spreader roll as claimed in at least one of the preceding claims, **characterized in that** the core (12) is provided with a stop (26) on its outer circumference at one end and with a thread (54) for a nut (24) to be screwed on at its opposite end.

5. The spreader roll as claimed in one of the preceding claims, **characterized in that** the core (12) consists of steel or plastic, in particular carbon fiber-reinforced plastic.

6. The spreader roll as claimed in at least one of the preceding claims, **characterized in that** the plastic trim (14) is formed from polyoxymethylene (POM) or polyamide (PA).

## Revendications

1. Rouleau d'épandage (10) pour un dispositif de distribution de granulés ou de fibres, le rouleau d'épandage (10) présentant un noyau cylindrique porteur (12), pouvant être monté de manière rotative sur un cadre du dispositif de distribution, et une garniture en matière plastique (14) étant prévue au moins par sections sur la périphérie extérieure du noyau (12), qui est pourvue de poils et/ou de broches, **caractérisé en ce que** la garniture en matière plastique est configurée sous forme tubulaire et est fixée sur le noyau sans possibilité de rotation et de manière à pouvoir être détachée sans être détruite, et **en ce qu'**entre une périphérie intérieure de la garniture en matière plastique (14) et une périphérie extérieure du noyau (12) est prévue au moins une clavette (50).

2. Rouleau d'épandage selon la revendication 1, **caractérisé en ce que** la garniture en matière plastique (14), vue sur une longueur du noyau porteur (12), est divisée en plusieurs segments tubulaires (14a, 14b, 14c, 14d) .

3. Rouleau d'épandage selon au moins l'une quelconque des revendications précédentes, **caractérisé en ce qu'**un diamètre de la périphérie intérieure de la garniture en matière plastique (14) et un diamètre de la périphérie extérieure du noyau (12) sont adaptés l'un à l'autre de telle sorte que la garniture en matière plastique (14) peut être enfilée sur le noyau (12) mais repose sans jeu sur le noyau (12).

4. Rouleau d'épandage selon au moins l'une quelconque des revendications précédentes, **caractérisé en ce que** le noyau (12) est muni sur sa périphérie extérieure d'une butée (26) à une extrémité et d'un filetage (54) à l'extrémité opposée pour le vissage d'un écrou (24).

5. Rouleau d'épandage selon l'une quelconque des revendications précédentes, **caractérisé en ce que** le noyau (12) est constitué d'acier ou de matière plastique, notamment de matière plastique renforcée par des fibres de carbone.

6. Rouleau d'épandage selon au moins l'une quelconque des revendications précédentes, **caractérisé en ce que** la garniture en matière plastique (14) est formée de polyoxyméthylène (POM) ou de polyamide (PA).
